Europäisches Patentamt

European Patent Office

Office européen des brevets

(11) Veröffentlichungsnummer: **0 290 709**
**A1**

(12) **EUROPÄISCHE PATENTANMELDUNG**

(21) Anmeldenummer: **87890092.7**

(22) Anmeldetag: **11.05.87**

(51) Int. Cl.⁴: **A41D 13/00 , A41D 31/02**

(43) Veröffentlichungstag der Anmeldung:
**17.11.88 Patentblatt 88/46**

(84) Benannte Vertragsstaaten:
**BE CH DE FR GB IT LI LU NL SE**

(71) Anmelder: **Grötzmeier, Rudolf**
**Kürnbergstrasse 5**
**A-4061 Pasching(AT)**

(72) Erfinder: **Grötzmeier, Rudolf**
**Kürnbergstrasse 5**
**A-4061 Pasching(AT)**

(74) Vertreter: **Hübscher, Gerhard, Dipl.-Ing. et al**
**Patentanwälte Dipl.-Ing. Gerhard Hübscher**
**Dipl.-Ing. Helmut Hübscher Dipl.-Ing. Heiner**
**Hübscher Spittelwiese 7**
**A-4020 Linz(AT)**

(54) Biegsames Verbundmaterial, insbesondere zur Erzeugung von Schutzbekleidung.

(57) Ein biegsames Verbundmaterial (1), insbesondere zur Erzeugung von Schutzbekleidung (7), weist eine widerstandsfähige Oberschicht aus Leder (2) oder einem textilen Werkstoff und eine verstärkende Unterschicht (3) aus einem reißfesten Kunstfasergewebe, vorzugsweise ein Aramid-oder Polyesterfasergewebe, auf.

Um dem Material eine besondere Reißfestigkeit und Strapazfähigkeit zu verleihen, sind Unterschicht und Oberschicht miteinander unter Einlage hochbelastbarer Zugbänder (5) vorzugsweise aus Kunststoff vernäht.

FIG.1

## Biegsames Verbundmaterial, insbesondere zur Erzeugung von Schutzbekleidung

Die Erfindung bezieht sich auf ein biegsames Verbundmaterial, insbesondere zur Erzeugung von Schutzbekleidung, mit einer widerstandsfähigen Oberschicht aus Leder oder einem textilen Werkstoff und einer verstärkenden Unterschicht aus einem reißfesten Kunstfasergewebe, vorzugsweise ein Aramid-oder Polyesterfasergewebe.

Die Erfindung bezieht sich auf ein biegsames Verbundmaterial, insbesondere zur Erzeugung von Schutzbekleidung, mit einer widerstandsfähigen Oberschicht aus Leder oder einem textilen Werkstoff und einer verstärkenden Unterschicht aus Kunstfasern.

Bei den bekannten Verbundmaterialien, wie sie z.B. für die Motorradbekleidung Verwendung finden, wird die Reißfestigkeit im wesentlichen durch die Werkstoffeigenschaften der Oberschicht bestimmt und die Unterschicht aus Watte oder fliesartigem faserigem Werkstoff dient vor allem als Polsterung, so daß Schutzanzüge aus diesem bekannten Material zwar Schlagwirkungen dämpfen und dadurch ein Aufprallen mildern können, doch nicht in der Lage sind, größeren Zugbelastungen standzuhalten und damit ein Zerreißen insbesondere der Arm-und Beinteile auszuschließen. Gerade für Motorradfahrer bleibt daher bisher die Schutzbekleidung unbefriedigend, da wegen der zu geringen Reißfestigkeit des Materials bei Unfällen - schwereren Verletzungen, wie der Verlust von Armen oder Beinen durch ein Hängenbleiben der Gliedmaßen an Leitschienen, entgegenkommenden Fahrzeugen od. dgl., kaum vorzubeugen ist.

Der Erfindung liegt somit die Aufgabe zugrunde, diese Mängel zu beseitigen und ein Verbundmaterial der eingangs geschilderten Art zu - schaffen, das sich durch seine besonders guten Festigkeitseigenschaften auszeichnet, eine extrem strapazfähige leder-oder stoffartige Ware darstellt und sich daher bestens für die Herstellung von Schutzbekleidung, insbesondere auch Motorradbekleidung, eignet.

Die Erfindung löst diese Aufgabe dadurch, daß Unterschicht und Oberschicht miteinander unter Einlage hochbelastbarer Zugbänder vorzugsweise aus Kunststoff vernäht sind. Diese Unterschicht dient hier als eigentliche Trägerschicht zur Aufnahme der auftretenden Belastungen und die Oberschicht selbst wird nur mehr als Verstärkung, als - schützende Abdeckung und zum Erreichen eines bestimmten optischen Erscheinungsbildes eingesetzt. Die den Verbindungsnähten entlanglaufenden Zugbänder übernehmen die auftretenden Belastungen von der Oberschicht und leiten sie in die Unterschicht ein, so daß durch die Nähte selbst keine Schwachstellen entstehen können und es zu einem wirklich hochfesten, zumindest in Zugbänderrichtung extrem belastungsfähigen Material kommt, das sich darüber hinaus wie eine andere leder-oder stoffartige Ware verarbeiten läßt.

Besonders günstig ist es, wenn erfindungsgemäß die Zugbänder aus einem Kunstfasergeflecht, vorzugsweise einem Aramid-oder Polyesterfasergeflecht bestehen, da ein solches Geflecht mit gewünschter Zugfestigkeit hergestellt werden kann und dabei in allen Richtungen biegeweich bleibt, was für die Fertigung von Schutzbekleidung eine bedeutende Rolle spielt.

Nach einer vorteilhaften Ausgestaltung der Erfindung ist die Unterschicht vorzugsweise an der der Oberschicht abgewandten Seite mit einem Dämpfungsbelag, vorzugsweise einem Silikonkautschukbelag versehen. Dieser Dämpfungsbelag soll punkt-oder linienförmige Belastungen flächig vergleichmäßigen und dadurch Schlägen od.dgl. Krafteinwirkungen begegnen. Abgesehen davon werden Durchtrennwiderstand, Wetterfestigkeit, Wärmedämmung u.dgl. des Verbundmaterials verbessert.

Um Verschiebungen zwischen Belag und Unterschicht zu vermeiden und eine bewegungsfreudige Verbindung zu erreichen, kann der Dämpfungsbelag auf die Unterschicht aufkaschiert sein, wobei ein Silikonkautschukbelag ohne Verwendung von Klebemitteln thermisch aufkaschierbar ist.

Durch seine hohe Reißfestigkeit und Widerstandsfähigkeit eignet sich das erfindungsgemäße Verbundmaterial vor allem für jede Art von Schutzbekleidung, aber auch für andere hochbelastete und strapazierfähige Gegenstände, wie Behälter, Abdeckungen, Bespannungen u.dgl. Wegen seiner hervorragenden Festigkeitseigenschaften eignet sich dieses Material demnach bestens zur Herstellung von Motorradbekleidung, wobei in den Arm-und Beinteilen vorzugsweise jeweils drei Verbindungsnähte mit ihren Zugbändern vorgesehen sind, die einerseits den Armen entlang und ggf. über Schultern und Rücken von Arm zu Arm und anderseits den Beinen entlang und hinauf bis zum Bund verlaufen. Diese Bekleidung kann praktisch nicht mehr zerreißen und bietet daher dem Motorradfahrer einen ausgezeichneten Schutz vor ärgeren Verletzungen. Schlag-und Aufprallwirkungen werden beträchtlich gemildert und so schreckliche Unfälle mit einem direkten Abreißen von Armen oder Beinen, wie sie bisher leider häufig auftreten, können weitgehend verhindert werden.

In der Zeichnung ist der Erfindungsgegenstand rein schematisch veranschaulicht, und zwar zeigen

Fig. 1 ein erfindungsgemäßes Verbundmaterial im Querschnitt und

Fig. 2 einen erfindungsgemäßen Motorradschutzanzug in Ansicht.

Um ein biegsames, stoff-oder lederartig verarbeitbares Verbundmaterial 1 besonders strapazfähig zu machen und ihm vor allem äußerste Reißfestigkeit zu verleihen, wird einer Oberschicht aus Leder 2 eine Unterschicht aus einem Aramidfasergewebe 3 aufgenäht, wobei die Verbindungsnäht 4 zwischen Oberschicht 2 und Unterschicht 3 unter Einlage längsverlaufender Zugbänder aus einem Aramidfasergeflecht 5 hergestellt sind. Auf die Oberschicht 2 einwirkende Zugkräfte werden durch die Zugbänder 5 aufgenommen und in Längsrichtung verteilt auf die Unterschicht 3 übertragen, so daß ein hochfester Verbund entsteht, bei dem vor allem die Zugbänder 5 und die Unterschicht 3 das belastbare Gerüst bilden und die Oberschicht 2 als optisch ansprechende, witterungs-und strapazfähige äußere Schutzlage dient. Damit außer der Reißfestigkeit auch eine hohe Schlagfestigkeit erreicht wird, ist auf die Unterschicht 3 an der der Oberschicht 2 abgekehrten Seite ein Silikonkautschukbelag 6 thermisch aufkaschiert, der bei Schlagbelastungen für eine Vergleichmäßigung der auftretenden Kräfte über größere Flächenbereiche sorgt und gefährliche Kerbwirkungen von Schlägen ausgleicht.

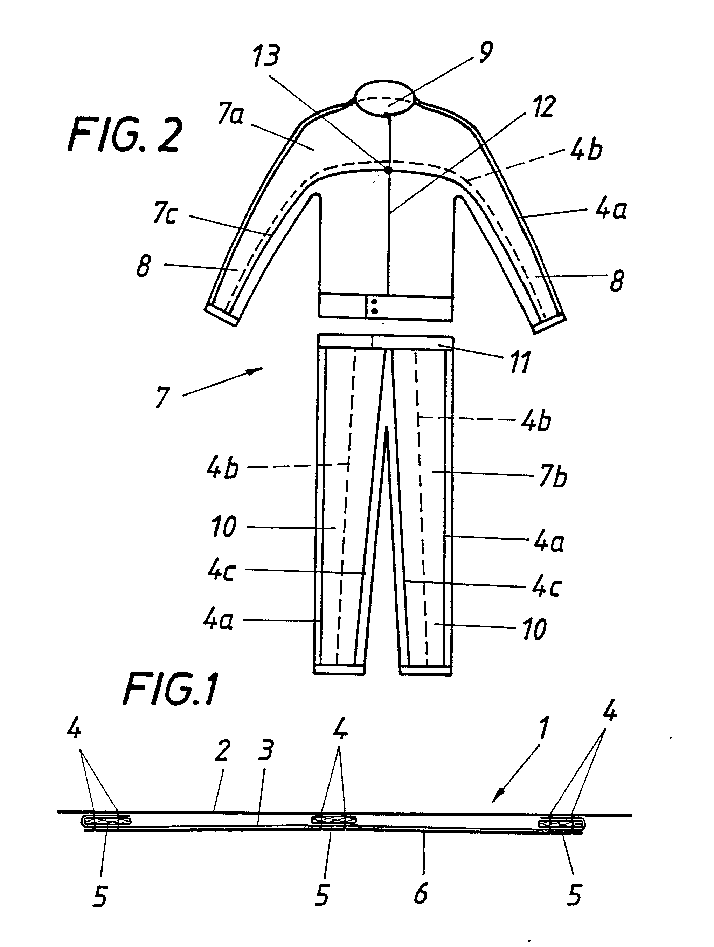

Das Verbundmaterial 1 eignet sich auf Grund seiner ausgezeichneten Festigkeitseigenschaften für Schutzbekleidung und läßt sich bestens zur Herstellung einer Motorradbekleidung 7 (Fig. 2) verwenden. Um die Reißfestigkeit des Verbundmaterials 1 optimal zu nutzen, müssen die Verbindungsnähte 4 mit den eingelegten Zugbändern 5 in Hauptbelastungsrichtung verlaufen, so daß diese Nähte im Oberteil 7a bzw. Unterteil 7b einerseits den Armen 8 entlang und, wenn dies möglich ist, über Schultern und Rücken 9 von Arm 8 und anderseits den Beinen 10 entlang bis hinauf zum Bund 11 durchgehend gezogen sind. Dabei weisen Arme 8 und Beine 10 jeweils drei Verbindungsnähte 4 auf, die an der Außenseite 4a, an der Hinterseite 4b und an der Vorderseite 4c liegen. Im Oberteil 7a sind die Nähte 4a, 4b durchgehend. Nur die Naht 4c ist zwangsweise durch den Reißverschluß 12 od.dgl. des Oberteils 7a getrennt, die Zugbänder 5 dieser Naht 4c können aber auch hier durch einen zugfesten Verschluß 13, etwa einen Karabinerverschluß, zusammengehängt werden. Eine solche Motorradbekleidung 7 bietet dem Motorsportler einen hervorragenden Schutz gegegen Verletzungen und verhindert vor allem das bei Motorradunfällen häufig vorkommende Abtrennen der Arme und Beine durch ein Hängenbleiben der Gliedmaßen.

## Ansprüche

1. Biegsames Verbundmaterial, insbesondere zur Erzeugung von Schutzbekleidung, mit einer widerstandsfähigen Oberschicht aus Leder oder einem textilen Werkstoff und einer verstärkenden Unterschicht aus einem reißfesten Kunstfasergewebe, vorzugsweise ein Aramid-oder Polyesterfasergewebe, dadurch gekennzeichnet, daß Unterschicht (3) und Oberschicht (2) miteinander unter Einlage hochbelastbarer Zugbänder (5) vorzugsweise aus Kunststoff vernäht sind.

2. Verbundmaterial nach Anspruch 1, dadurch gekennzeichnet, daß die Zugbänder aus einem Kunstfasergeflecht (5), vorzugsweise einem Aramid-oder Polyesterfasergeflecht bestehen.

3. Verbundmaterial nach Anspruch 1 oder 2, dadurch gekennzeichnet, daß die Unterschicht (3) vorzugsweise an der der Oberschicht (2) abgewandten Seite mit einem Dämpfungsbelag, vorzugsweise einem Silikonkautschukbelag (6) versehen ist.

4. Verbundmaterial nach Anspruch 3, dadurch gekennzeichnet, daß der Dämpfungsbelag (6) auf die Unterschicht (3) aufkaschiert ist.

5. Verbundmaterial nach einem der Ansprüche 1 bis 4, gekennzeichnet durch seine Verwendung zur Herstellung von Motorrad-Bekleidung (7), wobei in den Arm-(8) und Beinteilen (10) vorzugsweise jeweils drei Verbindungsnähte (4a, b, c) mit ihren Zugbändern (5)vorgesehen sind, die durchgehend einerseits den Armen (8) entlang und gegebenenfalls über Schultern und Rücken (9) von Arm (8) zu Arm (8) und anderseits den Beinen (10) entlang und hinauf bis zum Bund (11) verlaufen.

FIG. 2

13    9
7a    12
7c    4b
8    4a
8

7

11

4b
4b    7b
10    4a
4c    4c
4a    10

FIG.1

4    4    1    4
2    3
5    5    6    5

| Europäisches Patentamt | EUROPÄISCHER RECHERCHENBERICHT | Nummer der Anmeldung |
| --- | --- | --- |
| | | EP 87 89 0092 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| --- | --- | --- | --- |
| A | US-A-4 065 814 (E.N. FOX) --- | | A 41 D 13/00 A 41 D 31/02 |
| A | DE-A-2 855 871 (L. SEEBAUER) --- | | |
| A | FR-A-2 390 117 (J.P. STEVENS & CO. INC.) ----- | | |

|  |  |
| --- | --- |
| | RECHERCHIERTE SACHGEBIETE (Int. Cl.4) |
| | A 41 D A 62 B |

Der vorliegende Recherchenbericht wurde für alle Patentansprüche erstellt

| Recherchenort | Abschlußdatum der Recherche | Prüfer |
| --- | --- | --- |
| DEN HAAG | 20-01-1988 | GARNIER F.M.A.C. |